# FASCICULE DE BREVET EUROPEEN

(11) **EP 3 385 565 B1**
(45) Date de publication et mention de la délivrance du brevet: **09.03.2022**
(21) Numéro de dépôt: 17164682.1
(22) Date de dépôt: 04.04.2017
(51) Int. Cl.: F16C 1/26, F16C 1/10, F16C 11/06, F16F 1/38

(54) **EMBOUT D'ACCOUPLEMENT D'UN CABLE DE COMMANDE D'UNE BOITE DE VITESSE A UNE ROTULE**
ENDSTÜCK ZUR KOPPLUNG EINES STEUERKABELS EINES GETRIEBES AN EIN KUGELGELENK
BALL JOINT CONNECTOR FOR A GEARBOX CONTROL CABLE

(43) Date de publication de la demande: 10.10.2018
(73) Titulaire: DURA Automotive Holdings U.K., Ltd., Birmingham, B35 7AG (GB)
(72) Inventeur: BIAGGINI, Jean-Marie, 78640 NEAUPHLE LE VIEUX (FR); JOUANNY, Romain, 92140 CLAMART (FR)
(74) Mandataire: Cabinet Laurent & Charras

(56) Documents cités:
- DE-A1- 3 032 788
- DE-A1- 19 918 911
- DE-U1- 9 318 586
- FR-A1- 2 733 285
- US-A- 3 350 122
- US-A- 5 265 495

## Description

### DOMAINE TECHNIQUE

L'invention se rattache au secteur technique des équipements pour véhicules automobiles. Plus particulièrement, l'invention concerne l'accouplement des câbles de commande d'une boîte de vitesses à une rotule que présente une partie d'un levier de vitesses d'une part, ou que présente une partie de la boîte de vitesses d'autre part. Les câbles de commande sont notamment affectés à la sélection et/ou au passage des vitesses.

### ART ANTERIEUR

Le câble étant soumis à différents efforts de poussée et/ou de traction, généralement coaxiaux, de tels efforts sont transmis directement à l'embout d'accouplement dans lequel l'utilisateur ressent alors les vibrations de la boîte de vitesses.

Pour tenter de remédier à cet inconvénient, on a proposé de réaliser un amortissement au niveau de l'accouplement de l'embout à la rotule.

A cet effet, et selon l'état antérieur de la technique, il est connu un embout d'accouplement d'un câble de commande d'une boîte de vitesses à une rotule, ledit embout comprenant un logement recevant une pièce d'accouplement destinée à venir coiffer et s'accoupler avec ladite rotule. La pièce d'accouplement est reçue dans le logement avec capacité de déplacement à l'encontre d'un tampon d'amortissement en élastomère intercalé entre ladite pièce d'accouplement et une paroi interne du logement lorsqu'un effort axial est exercé sur le câble.

Toutefois, les résultats obtenus ne sont pas satisfaisants, car lors de la manipulation du levier de vitesses, le tampon s'écrase avec une perte de course du câble variable selon l'effort appliqué, qui ne dépend que de la dureté du tampon, laquelle varie tout au long de la durée de vie de l'embout d'accouplement, notamment du fait du vieillissement du tampon.

Il en résulte que le ressenti lors de la manipulation du levier n'est pas le même, en début et en fin de vie du tampon.

Les documents US5265495 et DE19918911 décrivent un embout d'accouplement selon le préambule de la revendication 1.

### EXPOSE DE L'INVENTION

L'invention a pour but de remédier à ces inconvénients d'une manière simple, sûre, efficace et rationnelle.

Le problème posé est d'assurer un amortissement dans l'accouplement entre un câble de commande d'une boîte de vitesses et une rotule d'accouplement, avec pour objectif d'obtenir une réponse en double pente avec, dans un premier temps, une transmission progressive de l'effort lors de la manipulation du levier de commande de la boîte de vitesse, jusqu'à atteindre un point dur en fin de course, puis, dans un deuxième temps, une transmission complète de l'effort, le but recherché étant de limiter les pertes de course et d'effort.

Pour résoudre un tel problème, il a été conçu et mis au point un embout d'accouplement conforme à l'état de la technique en ce qu'il comprend un logement recevant une pièce d'accouplement destinée à venir coiffer et s'accoupler avec la rotule, avec la pièce d'accouplement reçue dans le logement avec capacité de déplacement à l'encontre d'un tampon d'amortissement en élastomère intercalé entre ladite pièce d'accouplement et une paroi interne du logement, lorsqu'un effort axial est exercé sur le câble.

Selon l'invention, l'embout comprend des moyens de butée rigide agencés pour limiter le déplacement de la pièce d'accouplement et la déformation élastique du tampon d'amortissement.

Il ressort de ces caractéristiques que l'on obtient un point de transmission d'effort fixe, avec un ressenti constant.

En effet, lors de la manipulation du levier de vitesses, le tampon s'écrase sous l'effort, permettant ainsi d'effacer ou à tout le moins de réduire les accrocs de la boîte de vitesses, mais en provoquant une perte de course. En revanche, après la butée rigide l'effort est transmis en direct et la perte de course est limitée.

De cette manière, la perte de course est fixe, et le ressenti lors de la manipulation du levier est robuste et constant tout au long de la durée de vie du tampon.

Selon une forme de réalisation particulière de conception simple, les moyens de butée sont constitués par deux épaulements ménagés sur la pièce d'accouplement, entre lesquels le tampon d'amortissement est reçu, et contre lesquels la paroi interne du logement est destinée à venir buter lors du déplacement de la pièce d'accouplement par rapport à l'embout, et après déformation élastique du tampon.

De préférence, l'embout se présente sous la forme d'un embout à œil destiné à être fixé à l'extrémité du câble de commande.

La pièce d'accouplement se présente par exemple sous la forme d'un capuchon reçu coaxialement dans l'orifice de l'embout à œil et avec capacité de déplacement radial à l'encontre du tampon intercalé entre ledit capuchon et une paroi interne de l'orifice de l'embout à œil.

Avantageusement, le capuchon se présente en deux parties accouplées l'une à l'autre, dont l'une forme un capot de protection. Chaque partie comprend une collerette d'appui sur l'embout d'accouplement.

### DESCRIPTION SOMMAIRE DES FIGURES

D'autres avantages et caractéristiques ressortiront mieux de la description qui va suivre, donnée à titre d'exemple non limitatif, de l'embout d'accouplement selon l'invention, à partir des dessins annexés dans lesquels :
- la figure 1 est une vue en perspective d'une extrémité d'un câble de commande d'une boîte de vitesses équipée d'un embout d'accouplement, selon les caractéristiques de l'invention,
- la figure 2 est une vue similaire à celle de la figure 1, l'embout étant représenté en perspective éclatée,
- la figure 3 est une vue en coupe de l'embout selon l'invention, avant la transmission d'efforts par le câble, et donc avant déformation élastique du tampon,
- la figure 4 est une vue similaire à celle de la figure 3, après transmission d'effort via le câble et écrasement du tampon ;
- la figure 5 est une vue représentant un graphique illustrant la courbe de réponse de la commande d'une boîte de vitesses équipée de l'embout d'accouplement selon l'invention ;
- la figure 6 est une vue représentant un graphique illustrant la courbe de réponse de la commande d'une boîte de vitesses équipée de l'embout d'accouplement selon l'art antérieur.

### DESCRIPTION DETAILLEE DE L'INVENTION

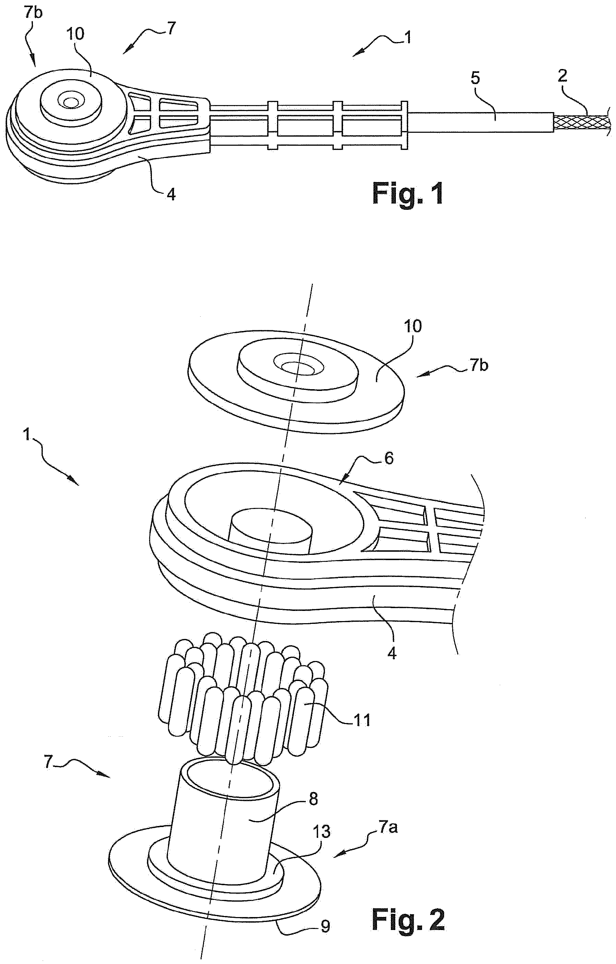

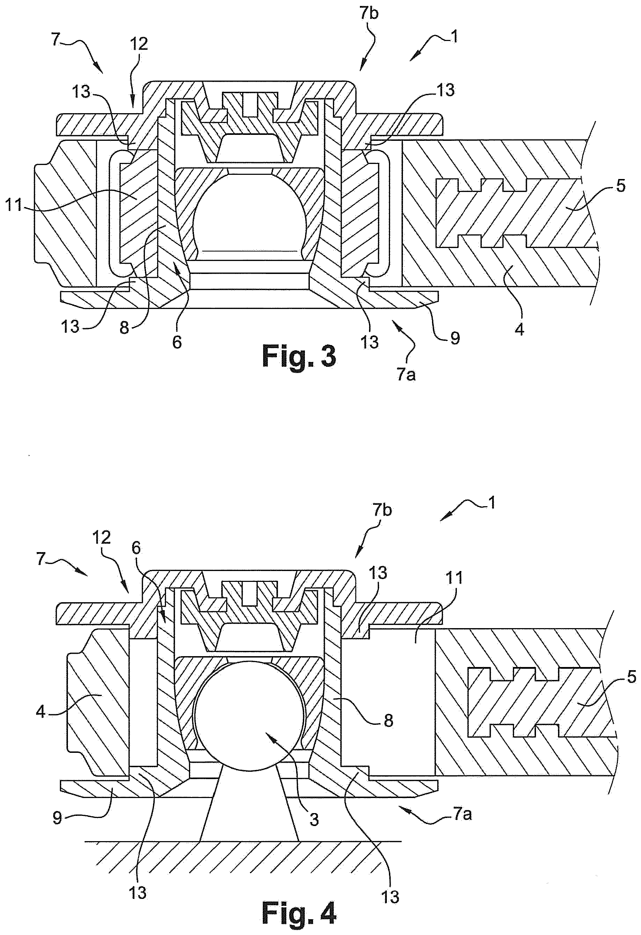

En référence aux figures 1 à 4, l'invention concerne un embout d'accouplement (1), pour la fixation d'un câble (2) de commande d'une boîte de vitesses automobile, d'une part à une partie d'une levier de commande et/ou d'autre part à une partie de la boîte de vitesses pour la sélection et/ou le passage des vitesses. En pratique, l'embout d'accouplement (1) est fixé auxdites parties par accouplement sur une rotule (3) que présente chacune de ces parties.

L'embout d'accouplement (1) se présente par exemple sous la forme d'un embout à œil (4) surmoulé sur une tige métallique (5) transmettant les efforts via le câble (2), et destinée à être sertie sur ledit câble (2).

L'orifice (6) de l'embout à œil (4) définit un logement recevant une pièce d'accouplement (7) à la rotule (3) se présentant par exemple sous la forme d'un capuchon comprenant une première partie (7a) et une deuxième partie (7b), accouplées l'une à l'autre.

La première partie (7a) du capuchon comprend un corps cylindrique (8) creux inséré coaxialement dans l'orifice (6) de l'embout et destiné à venir coiffer la rotule (3) pour s'accoupler à celle-ci. Le corps cylindrique (8) est prolongé radialement par une collerette (9) d'appui autour de l'orifice (6), du côté par lequel le corps cylindrique (8) coiffe la rotule (3).

La deuxième partie (7b) du capuchon se présente sous la forme d'un capot de protection venant s'accoupler sur l'extrémité du corps cylindrique (8) opposée à la collerette (9), et définit également une collerette (10) d'appui autour de l'orifice (6), du côté opposé à la première collerette (9). Les collerettes (9, 10) d'appui du capuchon permettent de borner et d'obturer l'orifice (6) et bloquent le déplacement axial dudit capuchon.

Le corps cylindrique (8) du capuchon présente une dimension plus petite que celle de l'orifice (6) de sorte que le capuchon est apte se déplacer radialement à l'intérieur dudit orifice (6) lorsqu'un effort axial est exercé sur le câble (2), en poussée ou en traction.

Un tampon d'amortissement (11) en élastomère est intercalé entre le capuchon et une paroi interne de l'orifice (6) pour amortir le déplacement radial dudit capuchon

Selon l'invention, des moyens (12) de butée rigide permettent de limiter le déplacement radial du capuchon et la déformation élastique du tampon d'amortissement (11).

Selon une forme de réalisation préférée, ces moyens (12) de butées sont constitués par deux épaulements (13) ménagés sur le capuchon. Plus précisément, un premier épaulement (13) est ménagé à la base du corps cylindrique (8) de la première partie (7a), à la liaison avec la collerette (9). Et un deuxième épaulement (13) est ménagé, de manière symétrique, sur la deuxième partie (7b) du capuchon au niveau de la liaison entre le corps cylindrique (8) et la collerette (10).

Les deux épaulements (13) définissent entre eux un espace dans lequel le tampon d'amortissement (11) est reçu. En position de repos, les épaulements (13) ne sont pas en contact avec l'embout à œil (4), et il subsiste un jeu entre ledit embout à œil (4) et lesdits épaulements (13). Ce jeu correspond à la perte de course maximale du câble (2). La perte de course est donc maitrisée et limitée.

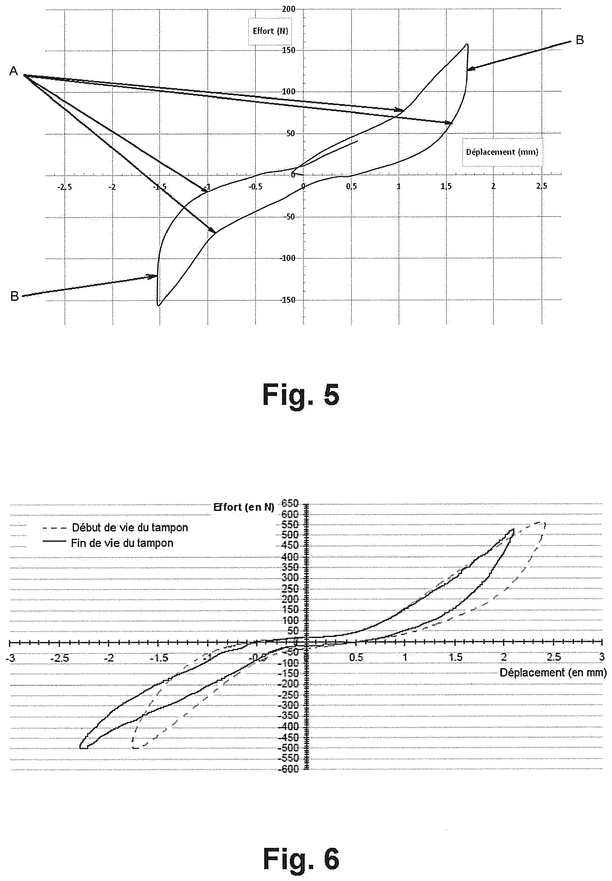

Ainsi, lors de la manipulation du levier de commande de la boîte de vitesses, le capuchon se déplace relativement par rapport à l'embout à œil (4) entraînant l'écrasement du tampon (11) sous l'effort (voir zones « A » sur la figure 5), en permettant d'effacer, ou à tout le moins de réduire, les accrocs de la boîte de vitesses, jusqu'à ce que les épaulements (13) butent contre la paroi interne de l'orifice (6) (voir zones « B » sur la figure 5). Lorsque les épaulements (13) sont en butée rigide contre la paroi interne de l'orifice, l'effort du levier de vitesses est transmis en direct (voir zones « B »).

La perte de course est donc fixe, et le ressenti lors de la manipulation du levier est robuste et constant tout au long de la durée de vie du tampon.

Les avantages ressortent bien de la description, en particulier on souligne et/ou on rappelle que :
- la butée rigide obtenue après la compression du tampon (11) permet d'obtenir, dans un premier temps, une réponse en double pente avec une transmission progressive d'effort en limitant les vibrations, et dans un deuxième temps, l'atteinte du point dur en fin de course pour transmettre complètement l'effort ;
- les pertes de courses et d'efforts sont maitrisés et limités ;
- le point de transmission d'effort est fixe tout au long de la durée de vie de l'embout ;
- la perte de course est fixe, permettant un dimensionnement avec précision des éléments constitutifs de l'embout ;
- le ressenti lors de la manipulation du levier de vitesses est constant lors de la commande de l'effort, et ce tout au long de la durée de vie de l'embout ;
- l'amortissement est réalisé par un seul élément.

La figure 5 illustre les avantages précités en ce sens qu'elle représente la courbe de réponse de la commande d'une boîte de vitesses équipée d'un embout selon l'invention. On aperçoit sur cette figure 5 des zones variables de la courbe de réponse, référencées «A», en fonction de la dureté du tampon d'amortissement (11). Ces zones «A» correspondent à la transmission progressive de l'effort en limitant les vibrations de l'embout d'accouplement, notamment avec l'amortissement du tampon (11). On aperçoit ensuite des zones de déplacement limité, référencées « B » permettant une réponse verticale et répétable de l'effort. Ces zones « B » correspondent aux butées rigides contre les épaulements (13) et donc à l'atteinte du point dur en fin de course pour transmettre complètement et directement l'effort.

Les avantages de la présente invention ressortent bien par comparaison au graphique de la figure 6, illustrant la courbe de réponse d'une commande de boîte de vitesses équipée d'un embout selon l'art antérieur. Sur le graphique de cette figure 6, on aperçoit que la réponse n'est pas la même en fonction de l'usure du tampon.

## Revendications

1. Embout d'accouplement (1) d'un câble (2) de commande d'une boîte de vitesses d'un véhicule automobile à une rotule (3) d'une partie d'un levier de vitesses ou d'une partie de la boîte de vitesses, l'embout (1) se présente sous la forme d'un embout à œil (4) destiné à être fixé à l'extrémité du câble (2) de commande et comprend un logement (6) recevant une pièce d'accouplement (7) destinée à venir coiffer et s'accoupler avec la rotule (3), la pièce d'accouplement (7) étant reçue dans le logement avec capacité de déplacement à l'encontre d'un tampon d'amortissement (11) en élastomère intercalé entre ladite pièce d'accouplement (7) et une paroi interne du logement (6), lorsqu'un effort axial est exercé sur le câble (2), l'embout (1) comprend des moyens (12) de butée rigide agencés pour limiter le déplacement de la pièce d'accouplement (7) et la déformation élastique du tampon d'amortissement (11), la pièce d'accouplement (7) se présente sous la forme d'un capuchon reçu coaxialement dans l'orifice (6) de l'embout à oeil (4) et avec capacité de déplacement radial à l'encontre du tampon intercalé entre ledit capuchon et la paroi interne de l'orifice (6), le capuchon se présente en deux parties (7a, 7b) accouplées l'une à l'autre, dont l'une forme un capot de protection, chaque partie comprend une collerette (9, 10) d'appui sur l'embout d'accouplement (1), ***caractérisé* en ce que** chaque partie (7a, 7b) du capuchon comprend un épaulement (13), le tampon d'amortissement (11) est reçu entre les épaulements (13), et la paroi interne du logement (6) est destinée à venir buter contre les épaulements (13) lors du déplacement de la pièce d'accouplement (7) par rapport à l'embout (1) et après déformation élastique du tampon.

## Patentansprüche

1. Kupplungsanschluss (1) zum Verbinden eines Steuerkabels (2) eines Getriebes eines Kraftfahrzeug mit dem Kugelkopf (3) eines Teils eines Schalthebels oder eines Teils des Getriebes, das Anschlussstück (1) hat die Form eines Anschlussstücks mit Öffnung (4), vorgesehen zur Befestigung am Endstück des Steuerkabels (2) und umfasst eine Aufnahme (6), zur Unterbringung eines Kupplungsstücks (7), bestimmt zur Abdeckung und Ankupplung an den Kugelkopf (3), das Kupplungsstück (7) ist dabei in der Aufnahme so untergebracht, dass es verschiebbar ist gegenüber einem Dämpfungspuffer (11) aus Elastomer, eingesetzt zwischen diesem Kupplungsstück (7) und der Innenwand der Aufnahme (6), wenn eine axiale Kraft auf das Kabel (2) ausgeübt wird, der Kupplungsanschluss (1) enthält starre Anschlagelemente (12), die so ausgelegt sind, dass sie die Verschiebung des Kupplungsstücks (7) und die elastische Verformung des Dämpfungspuffers (11) begrenzen, das Kupplungsstück (7) hat die Form einer Kappe, koaxial untergebracht in der Öffnung (6) des Anschlussstücks mit Öffnung (4) und mit einer Fähigkeit zur radialen Verschiebung gegenüber dem Puffer, der zwischen dieser Kappe und der Innenwand der Öffnung (6) eingesetzt ist, die Kappe besteht aus zwei Teilen (7a, 7b), die miteinander verkuppelt sind, von denen eine ein Schutzkappe bildet, jedes Teil umfasst einen Auflagebund (9, 10) auf dem Kupplungsanschluss (1), ***dadurch gekennzeichnet,* dass** jedes Teil (7a, 7b) der Kappe außerdem eine Schulter (13) umfasst, der Dämpfungspuffer (11) wird zwischen den Schultern (13) untergebracht und die Innenwand der Aufnahme (6) dient als Anschlag gegen die Schultern (13) bei einer Verschiebung des Kupplungsstücks (7) bezogen auf den Kupplungsanschluss (1) und nach elastischer Verformung des Puffers.

## Claims

1. Coupling endpiece (1) for a control cable (2) of a motor vehicle gearbox to a ball joint (3) of part of a gear lever or part of the gearbox, the endpiece (1) being presented in the form of an eye endpiece (4) designed to be fixed to the end of the control cable (2) and comprises a housing (6) receiving a coupling part (7) intended to cover and to be coupled with the ball joint (3), the coupling part (7) being received in the housing with the capacity to move against a damping pad (11) made of elastomer interposed between said coupling part (7) and an inner wall of the housing (6), when an axial force is exerted on the cable (2), the endpiece (1) comprises rigid abutment means (12) arranged to limit the movement of the coupling part (7) and the elastic deformation of the damping pad (11), the coupling part (7) being presented in the form of a cap received coaxially in the orifice (6) of the eye endpiece (4) and with the capacity to move radially against the pad interposed between said cap and the internal wall of the orifice (6), the cap is presented in two parts (7a, 7b) coupled to each other, one of which forms a protective cover, each part comprises a collar (9, 10) bearing on the coupling endpiece (1), ***characterised* in that** each part (7a, 7b) of the cap comprises a shoulder (13), the damping pad (11) is received between the shoulders (13), and the internal wall of the housing (6) is intended to abut against the shoulders (13) during the movement of the coupling part (7) with respect to the endpiece (1) and after elastic deformation of the pad.
